(19) Europäisches Patentamt
European Patent Office
Office européen des brevets

(11) **EP 4 446 195 A1**

(12) **EUROPÄISCHE PATENTANMELDUNG**

(43) Veröffentlichungstag:
16.10.2024  Patentblatt 2024/42

(21) Anmeldenummer: 23214353.7

(22) Anmeldetag: **05.12.2023**

(51) Internationale Patentklassifikation (IPC):
**B61L 23/04** (2006.01)    G06T 7/20 (2017.01)
G06V 20/58 (2022.01)

(52) Gemeinsame Patentklassifikation (CPC):
**B61L 23/041;** G06V 20/58

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **12.04.2023  DE 102023203319**

(71) Anmelder: **Siemens Mobility GmbH**
**81739 München (DE)**

(72) Erfinder:
• **Fuchs, Stefan**
**15745 Wildau (DE)**
• **Martens, Wolfram**
**2563RM Den Haag (NL)**
• **Rudolph, Peter**
**12459 Berlin-Schönweide (DE)**

(74) Vertreter: **Siemens Patent Attorneys**
**Postfach 22 16 34**
**80506 München (DE)**

(54)  **VERFAHREN ZUR HINDERNISERKENNUNG FÜR EIN SPURGEBUNDENES FAHRZEUG**

(57)  Es wird ein Verfahren zur Hinderniserkennung für ein spurgebundenes Fahrzeug (1) beschrieben. Bei dem erfindungsgemäßen Verfahren zur Hinderniserkennung werden erste Bilddaten (BD1) von einem Lichtraum (5) des spurgebundenen Fahrzeugs (1) mit einer an dem spurgebundenen Fahrzeug (1) angeordneten Bildaufnahmeeinheit (2) mit einer ersten relativen Pose (RP1) der Bildaufnahmeeinheit (2) relativ zu einer von dem spurgebundenen Fahrzeug (1) befahrenen Spur (3) erfasst. Weiterhin werden zweite Bilddaten (BD2) mit der Bildaufnahmeeinheit (2) mit einer sich von der ersten relativen Pose (RP1) unterscheidenden zweiten relativen Pose (RP2) der Bildaufnahmeeinheit (2) relativ zu der von dem spurgebundenen Fahrzeug (1) befahrenen Spur (3) erfasst. Zudem werden Rückprojektionsdaten (RPD), welche Bildpunkte der ersten Bilddaten (BD1) und der zweiten Bilddaten (BD2) über eine Rückprojektion einander zuordnen, auf Basis vorbekannter Referenz-3D-Daten ($P^W$) von dem bildlich erfassten Lichtraum (5) ermittelt. Schließlich wird ermittelt, ob ein Hindernis (H) in dem Lichtraum (5) auftritt, in Abhängigkeit von einem Rückprojektionsfehler (RPF), welcher auf Basis der über die Rückprojektion einander zugeordneten Bildpunkte der ersten Bilddaten (BD1) und der zweiten Bilddaten (BD2) ermittelt wird. Es wird auch eine Hinderniserkennungseinrichtung (50) beschrieben. Ferner wird ein spurgebundenes Fahrzeug (1) beschrieben.

## FIG 1

**Beschreibung**

Die Erfindung betrifft ein Verfahren zur Hinderniserkennung für ein spurgebundenes Fahrzeug. Außerdem betrifft die Erfindung eine Hinderniserkennungseinrichtung. Überdies betrifft die Erfindung ein spurgebundenes Fahrzeug.

Die bordseitige Hinderniserkennung ist bei spurgebundenen Fahrzeugen, insbesondere im Schienenverkehr, von entscheidender Bedeutung, um einen sicheren und reibungslosen Betrieb zu ermöglichen. In der Zukunft soll ein automatisierter Fahrbetrieb erfolgen, bei dem die Steuerung von Schienenfahrzeugen ganz oder teilweise von einem Fahrtrechner übernommen wird.

Geschwindigkeit und Trägheit eines Schienenfahrzeugs erfordern, dass Hindernisse bis zu einer Distanz von mehreren hundert Metern detektierbar sind. Sicherheitsregeln erfordern eine hohe Verlässlichkeit der Objektdetektion und auch kleine Objekte müssen erkannt werden, um Personenschäden und Sachschäden an den Schienenfahrzeugen zu vermeiden.

Außerdem sind Eigenschaften möglicher Kollisionsobjekte, wie zum Beispiel deren Größe, Position, Dynamik usw., von Interesse, um angemessen auf das Auftreten eines Hindernisses zu reagieren. Beispielsweise sollen Gegenstände, Menschen und Tiere voneinander unterschieden werden.

Die folgenden Veröffentlichungen gewähren einen Überblick über herkömmliche Verfahren zur bordseitigen Hindernisdetektion und Abstandsschätzung auf dem Gebiet des Schienenverkehrs:

Badrloo, Varshosaz, Pirasteh and Li: Image-Based Obstacle Detection Methods for the Safe Navigation of Unmanned Vehicles: A Review, 2022 und
Ristic-Durrant, Franke and Michels: A Review of Vision-Based On-Board Obstacle Detection and Distance Estimation in Railways, 2021.

Ein breites Spektrum von elektrooptischen Sensoren, wie zum Beispiel Kameras und Lidar-Systeme, von elektromagnetischen Sensoren, wie zum Beispiel Radar, und von passenden Algorithmen wird verwendet, um Information über das Auftreten und die Pose von Hindernissen im Lichtraumprofil bzw. Schienenbereich eines Schienenfahrzeugs zu erhalten. Verfahren zur Hindernisdetektion können in zwei Kategorien eingeteilt werden: eine direkte und eine indirekte Hindernisdetektion.

Eine direkte Hindernisdetektion erfolgt mit Abstandssensoren, welche den Freiraum vor dem Schienenfahrzeug messen. Hierfür werden Stereokamerasysteme, Lidar-Systeme und Radar-Systeme eingesetzt. Mögliche Verletzungen des Freiraums können direkt auf der Basis von Punktwolken oder einer vergleichbaren Raum-Repräsentation der überwachten Umgebung erkannt werden. Die räumliche Auflösung, Genauigkeit und der Messabstand hängen von den Sensoreigenschaften, einer klugen Kombination komplementärer Sensoren und der Nutzung intelligenter Signalprozesstechniken ab.

Diese Sensorsysteme können in ihrem Betrieb eingeschränkt sein, weil zum Beispiel Tageslicht benötigt wird, Augen geschützt werden müssen, die Auflösung oder der Messbereich eingeschränkt sind. Außerdem weisen sie einen hohen Energieverbrauch und eine komplexe Handhabung auf und sind mit hohen Kosten verbunden.

Eine indirekte Hindernisdetektion basiert auf vergleichsweise kostengünstigen, weniger komplexen monokularen Kameratechniken. Jedoch wird die reduzierte Sensorkomplexität meist durch einen erhöhten Aufwand bei der mathematischen Auswertung der Sensordaten erkauft. Die hierbei genutzten Algorithmen teilen sich in zwei unterschiedliche Kategorien auf.

Es gibt Algorithmen, mit denen der Abstand eines Objekts anhand von monokularen Bilddaten ermittelt wird. Beispielsweise werden Strategien wie "structure from motion" oder "optischer Fluss" verwendet, um eine skalenfreie Abstandsmessung zu realisieren. "Structure from motion" ist eine Methode, um 3D-Informationen durch die Überlappung zeitversetzter Bilder zu gewinnen, wobei die Parallaxe ausgenutzt wird. Im Gegensatz zur herkömmlichen Photogrammetrie müssen zuvor jedoch keine Zielobjekte angegeben werden, von denen die 3D-Position bekannt ist. Der optische Fluss einer Bildsequenz ist das Vektorfeld der in die Bildebene projizierten Geschwindigkeit von sichtbaren Punkten des Objektraumes im Bezugsystem der Abbildungsoptik.

Mittels Modellannahmen auf Basis eines bekannten Verlaufs von Schienenstrangpfaden und auf Basis von wohlbekannten Abständen zwischen zwei Schienensträngen können absolute Abstände ermittelt werden. Die Schienenstrecken werden als eine Art Maßstab in den Bilddaten entweder aus der Ego-Perspektive oder der Vogelperspektive verwendet. Auf deren Basis kann eine Tiefenrepräsentation erzeugt werden und eine räumliche Hindernisdetektion ermöglicht werden.

Außerdem gibt es erscheinungsbasierte Verfahren. Dabei werden Referenzbilder mit einem freien Lichtraum mit einer aktuellen Sicht auf eine Schienenstrecke verglichen, um Unterschiede zwischen diesen beiden unterschiedlichen Bilddaten zu finden und Hindernisse zu erkennen.

Weiterhin gibt es eine wachsende Anzahl von auf maschinellem Lernen basierenden Verfahren, mit denen Anomalien oder Hindernisse im Lichtraumprofil detektiert werden. Abstandsinformationen werden entweder durch herkömmliche Verfahren, wie sie vorstehend beschrieben wurden, oder durch ein direktes Nebenprodukt des jeweiligen tiefen neuronalen Netzwerks ermittelt. Diese indirekten Methoden leiden allerdings unter einer starken Beanspruchung von Rechenressourcen und Einschränkungen, welche auf Annahmen zurückzuführen sind, die über die Umgebung vorgenommen werden. Insbesondere Deep-Learning-basierte Verfahren sind anfällig für Domänenänderung und "feindliche" Angriffe. Eine Domänenänderung findet dann statt, wenn sich eine Trainingsdatenverteilung von den Daten, auf die ein durch diese Trainingsdaten trainierter Algorithmus später angewendet wird, grundlegend unterscheidet. Unter einem "feindlichen Angriff" versteht man die Eingabe bzw. Erzeugung von irreführenden Eingangsdaten, die absichtlich zu Fehlklassifikationen führen sollen. Die beschränkte Verallgemeinerbarkeit von neuronalen Netzwerken und ihr umfangreicher Trainingsaufwand sowie Sicherheitsbedenken stellen weitere Nachteile dar.

Soll der automatisierte Betrieb auf komplexere Verkehrsszenarien ausgedehnt werden, so ist eine Hindernisdetektion durch bordseitige Sensoren, wie zum Beispiel Kameras oder Lidar, unerlässlich.

Es besteht also die Aufgabe, ein vereinfachtes und universell einsetzbares Verfahren und eine entsprechende Vorrichtung zur Erkennung von Hindernissen für spurgebundene Fahrzeuge und insbesondere für Schienenfahrzeuge bereitzustellen.

Diese Aufgabe wird durch ein Verfahren zur Hinderniserkennung für ein spurgebundenes Fahrzeug gemäß Patentanspruch 1, eine Hinderniserkennungseinrichtung gemäß Patentanspruch 12 und ein spurgebundenes Fahrzeug gemäß Patentanspruch 13 gelöst.

Bei dem erfindungsgemäßen Verfahren zur Hinderniserkennung für ein spurgebundenes Fahrzeug, vorzugsweise ein Schienenfahrzeug, werden zunächst zu einem ersten Zeitpunkt erste Bilddaten von einem Lichtraum des spurgebundenen Fahrzeugs mit einer an dem spurgebundenen Fahrzeug angeordneten Bildaufnahmeeinheit, im Folgenden teilweise auch als Kamera bezeichnet, erfasst. Bei spurgebundenen Fahrzeugen ist die exakte Trajektorie des Fahrzeugs vorgegeben. Insbesondere kann auch eine exakte Position des spurgebundenen Fahrzeugs, vorzugsweise ein Schienenfahrzeug, nur auf dieser vorgegebenen Trajektorie liegen und eine Orientierung des Fahrzeugs nur konform mit dem Verlauf der Spur, insbesondere dem Verlauf des Schienenstrangs, sein. Unter Bilddaten sollen zweidimensionale Bildinformationen, welche also durch 2D-Daten repräsentiert werden, von einem dreidimensionalen Bereich, insbesondere dem erwähnten Lichtraum, verstanden werden.

Die ersten Bilddaten werden mit einer ersten relativen Pose der Bildaufnahmeeinheit zu einer von dem spurgebundenen Fahrzeug befahrenen Spur erfasst. Der sensoriell erfasste Lichtraum des spurgebundenen Fahrzeugs umfasst einen vor dem Schienenfahrzeug verlaufenden Fahrkanal des Fahrzeugs, in dem die von dem Fahrzeug befahrene Spur verläuft. Das zugehörige Lichtraumprofil ist eine definierte Umgrenzungslinie, die für die Querebene eines Fahrwegs eines spurgebundenen Fahrzeugs festgelegt wird. Mit dem Lichtraumprofil wird der "lichte Raum" vorgeschrieben, der auf dem Fahrweg von Gegenständen freizuhalten ist. Dieser Lichtraum wird von dem spurgebundenen Fahrzeug als, als nächstes zu befahrender Fahrbereich überwacht, um Kollisionen bei der Weiterfahrt zu vermeiden. Die erste relative Pose ergibt sich aus der relativen Pose der Bildaufnahmeeinheit zu dem spurgebundenen Fahrzeug zum ersten Zeitpunkt und aus der Pose des spurgebundenen Fahrzeugs relativ zu der befahrenen Spur. Aufgrund der Spurgebundenheit lässt sich die Pose des spurgebundenen Fahrzeugs besonders exakt ermitteln, wobei der exakt kartographierte Verlauf der Spur sowie eine sensorbasierte Ermittlung der Ego-Position des spurgebundenen Fahrzeugs zur Ermittlung der exakten Pose des spurgebundenen Fahrzeugs genutzt werden können.

Weiterhin werden zu einem zweiten Zeitpunkt zweite Bilddaten mit der Bildaufnahmeeinheit erfasst. Die Erfassung der zweiten Bilddaten erfolgt mit einer sich von der ersten relativen Pose unterscheidenden zweiten relativen Pose der Bildaufnahmeeinheit relativ zu der von dem spurgebundenen Fahrzeug befahrenen Spur, da sich das spurgebundene Fahrzeug zu dem zweiten Zeitpunkt weiterbewegt hat. Die relative Pose des spurgebundenen Fahrzeugs und damit auch die relative Pose der Bildaufnahmeeinheit zur Spur ändert sich, wenn sich das spurgebundene Fahrzeug auf der Spur weiterbewegt und/oder die Orientierung der Bildaufnahmeeinheit relativ zur Spur ändert. Die Orientierung der Bildaufnahmeeinheit ändert sich zum Beispiel dann, wenn die Spur vor dem Schienenfahrzeug eine Kurve beschreibt und die Bildaufnahmeeinheit dieser Kurve folgt, um den Lichtraum um diese Kurve herum zu überwachen.

Anschließend werden Rückprojektionsdaten in Richtung der zweiten relativen Pose auf Basis der ersten Bilddaten und vorbekannter Referenz-3D-Daten, vorzugsweise Referenz-Tiefendaten ermittelt. Die Referenz-3D-Daten (3D steht für "dreidimensional") weisen Informationen über das 3D-Profil des Lichtraums von dem spurgebundenen Fahrzeug bzw. vor dem spurgebundenen Fahrzeug, wenn keinerlei Hindernis in diesem Bereich auftritt, für die beiden relativen Posen bzw. aus der Perspektive der beiden relativen Posen betrachtet, auf. Die Referenz-3D-Daten werden vorzugsweise in einem lokalen Koordinatensystem ermittelt, welches die beiden Posen der Bildaufnahmeeinheit verbindet und in dem auch die Punktkoordinaten der Referenz-3D-Daten angegeben sind. Diese Referenz-3D-Daten lassen sich aufgrund der Unveränderlichkeit der befahrenen Spur und der Festgelegtheit der relativen Posen der Bildaufnahmeeinheit durch den Aufbau des Fahrzeugs, die Anordnung der Bildaufnahmeeinheit auf dem Fahrzeug sowie durch den Verlauf der Spur und die Kenntnis einer aktuellen Ego-Pose des Fahrzeugs in dem Moment der Aufnahme der ersten und zweiten Bilddaten berechnen. Die Rückprojektionsdaten weisen nun jedem Bildpunkt der ersten Bilddaten einen durch die Rückprojektion definierten Bildpunkt der zweiten Bilddaten zu. Diese Rückprojektion erfolgt auf Basis der Referenz-3D-Daten und der ersten und zweiten relativen Posen der Bildaufnahmeeinheit so, als ob in dem von der Bildaufnahmeeinheit überwachten Lichtraum vor dem spurgebundenen Fahrzeug kein Hindernis auftreten würde.

Schließlich wird ermittelt, ob ein Hindernis in dem Lichtraum auftritt. Diese Ermittlung erfolgt in Abhängigkeit von einem auf Basis der Rückprojektionsdaten und der ersten und zweiten Bilddaten ermittelten Rückprojektionsfehler. Der Rückprojektionsfehler ergibt sich dabei einfach aus der Differenz der Werte der über die Rückprojektion einander zugeordneten Bildpunkte der ersten und zweiten Bilddaten. Die "Werte" der Bildpunkte geben dabei eine Information wieder, welche einen Kontrast, insbesondere die Textur, der jeweiligen Bilddaten charakterisiert. Wie später noch im Einzelnen erläutert, können diese Werte die Intensität der Bildpunkte, die Grauwerte von Bildpunkten von Grauwertbildern oder die Farben der Bildpunkte bzw. der Intensität umfassen. Sind Hindernisse gleichförmig und weisen keine Textur auf, so können zumindest ihre Umrisse erkannt werden.

Tritt dieser Rückprojektionsfehler auf, so ist das ein Hinweis darauf, dass ein Hindernis in dem überwachten Lichtraum auftritt. Der Rückprojektionsfehler repräsentiert eine Abweichung der "Werte" der über die Rückprojektion einander zugeordneten Bildpunkte der erfassten ersten und zweiten Bilddaten. Voraussetzung für diese Abweichung oder Differenz ist, dass in den Bildern ein Kontrast zwischen dem Hindernis und dem Hintergrund vorhanden ist oder das Hindernis eine Textur aufweist. Auf Basis des erkannten Hindernisses können Reaktionen automatisch und/oder von Hand durchgeführt werden. Beispielsweise kann eine Alarmmeldung automatisiert ausgegeben werden oder ein automatisiertes Bremsmanöver automatisiert ausgelöst werden.

Vorteilhaft müssen erfindungsgemäß auf Basis der erfassten ersten und zweiten Bilddaten nicht erst 3D-Bilddaten gewonnen werden, sondern es genügt, einen Rückprojektionsfehler zu ermitteln, der sich bei einem Auftreten eines Hindernisses im Lichtraum bei der auf Basis von Referenz-3D-Daten durchgeführten Rückprojektion aufgrund der zunächst getroffenen Annahme ergibt, dass kein Hindernis auftritt. Auf diese Weise wird der Rechenaufwand im Vergleich zu einem herkömmlichen Verfahren, bei dem zunächst 3D-Daten von dem Lichtraum gewonnen werden, wobei diese 3D-Daten so gewonnen werden, dass der Rückprojektionsfehler minimiert wird, und dann in den 3D-Daten ein Hindernis gesucht wird, reduziert. Die für das Verfahren benötigten Eingangsdaten, insbesondere die Kenntnis des Spurverlaufs und der relativen Posen der Bildaufnahmeeinheit zu dem Spurverlauf, sind in der Regel für automatisiert gesteuerte spurgebundene Fahrzeuge verfügbar. Die bei dem erfindungsgemäßen Verfahren gewonnenen Informationen sind auch Voraussetzung für andere herkömmliche Verfahren zur Hindernisdetektion und daher kann das erfindungsgemäße Verfahren vorteilhaft als redundantes Verfahren mit anderen herkömmlichen Verfahren zur Hindernisdetektion auf Basis von Bilddaten eingesetzt werden, um die Verlässlichkeit der Hindernisdetektion in Kombination mit anderen herkömmlichen Verfahren zur Hindernisdetektion zu überwachen bzw. zu verbessern. Der Rechenaufwand ist auf eine Reihe von Matrixoperationen und geometrischen Transformationen, welche auf eine Bilddatenfolge angewandt werden, beschränkt. Es werden insbesondere keine komplexen und fehleranfälligen Abstandsabschätzungen benötigt, wie sie bei "structure from motion" oder Deep-Learningbasierten Tiefenmessungen benötigt werden. Es soll an dieser Stelle erwähnt werden, dass das erfindungsgemäße Verfahren vorzugsweise auf eine Folge von mehr als zwei aufeinanderfolgend erfassten Bilddatensätzen angewendet wird. Der Schritt der Rückprojektion erfolgt dann zwischen unterschiedlichen Bilddatensätzen der Folge von mehr als zwei aufeinanderfolgend erfassten Bilddatensätzen.

Die erfindungsgemäße Hinderniserkennungseinrichtung weist eine Eingangsschnittstelle zum Empfangen von ersten Bilddaten von einem Lichtraum eines spurgebundenen Fahrzeugs, welche mit einer an dem spurgebundenen Fahrzeug angeordneten Bildaufnahmeeinheit erfasst wurden, wobei die ersten Bilddaten mit einer ersten relativen Pose relativ zu einer von dem spurgebundenen Fahrzeug befahrenen Spur erfasst wurden, und zum Empfangen von zweiten Bilddaten, welche mit der Bildaufnahmeeinheit mit einer sich von der ersten relativen Pose unterscheidenden zweiten relativen Pose zu der von dem spurgebundenen Fahrzeug befahrenen Spur erfasst wurden, auf.

Teil der erfindungsgemäßen Hinderniserkennungseinrichtung ist auch eine Rückprojektionseinheit zum Ermitteln von Rückprojektionsdaten, welche Bildpunkte der ersten Bilddaten und der zweiten Bilddaten über eine Rückprojektion auf Basis vorbekannter Referenz-3D-Daten von dem bildlich erfassten Lichtraum einander zuordnen, auf Basis der vorbekannten Referenz-3D-Daten und der ersten und zweiten relativen Posen der Bildaufnahmeeinheit. Die Rückprojektionseinheit weist Ressourcen für einen Zugriff auf Referenz-3D-Daten von einem spurgebundenen Lichtraumprofil auf, um Rückprojektionsdaten zu ermitteln.

Die erfindungsgemäße Hinderniserkennungseinrichtung umfasst auch eine Detektionseinheit zum Ermitteln, ob ein Hindernis in dem Lichtraum auftritt, in Abhängigkeit von einem auf Basis der über die Rückprojektion einander zugeordneten Bildpunkte der ersten Bilddaten und der zweiten Bilddaten ermittelten Rückprojektionsfehler. Die erfindungsgemäße Hinderniserkennungseinrichtung teilt die Vorteile des erfindungsgemäßen Verfahrens zur Hinderniserkennung.

Das erfindungsgemäße spurgebundene Fahrzeug, vorzugsweise ein Schienenfahrzeug, weist eine vorzugsweise frontseitige Bilddatenaufnahmeeinheit zum Erfassen von Bilddaten von einem Lichtraum des spurgebundenen Fahrzeugs auf. Zudem umfasst das erfindungsgemäße spurgebundene Fahrzeug die erfindungsgemäße Hinderniserkennungseinrichtung. Weiterhin weist das erfindungsgemäße spurgebundene Fahrzeug eine Steuerungseinrichtung zum Steuern eines Fahrverhaltens des spurgebundenen Fahrzeugs in Abhängigkeit davon, ob von der Hinderniserkennungseinrichtung ein Hindernis im Lichtraum des spurgebundenen Fahrzeugs erkannt wurde, auf. Das erfindungsgemäße spurgebundene Fahrzeug teilt die Vorteile der erfindungsgemäßen Hinderniserkennungseinrichtung.

Ein Teil der zuvor genannten Komponenten der erfindungsgemäßen Hinderniserkennungseinrichtung kann ganz oder teilweise in Form von Softwaremodulen in einem Prozessor eines entsprechenden Rechensystems realisiert werden, z.B. von einer Steuereinheit oder einem bereits vorhandenen Rechensystem eines spurgebundenen Fahrzeugs, insbesondere eines Schienenfahrzeugs. Eine weitgehend softwaremäßige Realisierung hat den Vorteil, dass auch schon bisher verwendete Rechensysteme auf einfache Weise durch ein Software-Update nachgerüstet werden können, um auf die erfindungsgemäße Weise zu arbeiten.

Insofern wird die Aufgabe auch durch ein entsprechendes Computerprogrammprodukt mit einem Computerprogramm gelöst, welches direkt in ein Rechensystem einer Steuereinrichtung eines spurgebundenen Fahrzeugs ladbar ist, mit Programmabschnitten, um die Schritte zum Ermitteln von Rückprojektionsdaten und zum Ermitteln, ob ein Hindernis in dem Lichtraum auftritt, des erfindungsgemäßen Verfahrens zur Hinderniserkennung auszuführen, wenn das Programm in dem Rechensystem ausgeführt wird. Ein solches Computerprogrammprodukt kann neben dem Computerprogramm gegebenenfalls zusätzliche Bestandteile, wie z.B. eine Dokumentation, und/oder zusätzliche Komponenten, auch Hardware-Komponenten, wie z.B. Hardware-Schlüssel (Dongles etc.) zur Nutzung der Software, umfassen.

Zum Transport zum Rechensystem und/oder zur Speicherung an oder in dem Rechensystem kann ein computerlesbares Medium, z.B. ein Memorystick, eine Festplatte oder ein sonstiger transportabler oder fest eingebauter Datenträger dienen, auf welchem die von einem Rechensystem einlesbaren und ausführbaren Programmabschnitte des Computerprogramms gespeichert sind. Das Rechensystem kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Ausgestaltung des erfindungsgemäßen Verfahrens zur Hinderniserkennung für ein spurgebundenes Fahrzeug umfasst das Ermitteln von Rückprojektionsdaten das Generieren von virtuellen zweiten Bilddaten auf Basis einer Rückprojektionstransformation der ersten Bilddaten aus der ersten relativen Pose in Richtung der zweiten relativen Pose und wird der Rückprojektionsfehler durch einen Vergleich der virtuellen zweiten Bilddaten mit den zweiten Bilddaten ermittelt. Tritt kein Hindernis auf, so sind die virtuellen zweiten Bilddaten identisch mit den tatsächlich erfassten zweiten Bilddaten, andernfalls kommt es aufgrund des Hindernisses zu einem Rückprojektionsfehler, welcher durch einen Vergleich der zweiten virtuellen Bilddaten mit den tatsächlich erfassten zweiten Bilddaten ermittelbar ist. Denn durch die Rückprojektion wird einem Bildpunkt in den virtuellen zweiten Bilddaten ein aus der Perspektive der ersten relativen Pose erfasster Intensitätswert oder Farbwert von dem Hindernis, der eigentlich zu einem anderen Bildpunkt in den zweiten Bilddaten gehört, zugewiesen. Auf diese Weise unterscheiden sich die Intensitätswerte oder Farbwerte von identischen Bildpunkten der zweiten virtuellen Bilddaten und der zweiten Bilddaten, wenn ein Hindernis im Lichtraum auftritt. Als "virtuell" werden die virtuellen Bilddaten bezeichnet, weil sie nicht direkt auf einer Bildaufnahme beruhen, sondern durch eine rechnerische Rückprojektion der ersten Bilddaten in Richtung der zweiten relativen Pose generiert werden.

Bevorzugt wird bei dem erfindungsgemäßen Verfahren zur Hinderniserkennung für ein spurgebundenes Fahrzeug die erste relative Pose der an dem spurgebundenen Fahrzeug angeordneten Bildaufnahmeeinheit bezogen auf die von dem spurgebundenen Fahrzeug befahrene Spur an einer ersten geographischen Position des spurgebundenen Fahrzeugs ermittelt und wird die zweite relative Pose der Bildaufnahmeeinheit bezogen auf die von dem spurgebundenen Fahrzeug befahrene Spur an einer zu der ersten geographischen Position unterschiedlichen zweiten geographischen Position des spurgebundenen Fahrzeugs ermittelt. An unterschiedlichen geographischen Positionen unterscheidet sich der Blickwinkel und der Abstand der Bildaufnahmeeinheit zu einem potenziellen Hindernis. Diese unterschiedliche Perspektive wird dazu genutzt, für den Fall eines Auftretens eines Hindernisses einen Rückprojektionsfehler zu erzeugen.

Dabei umfasst bevorzugt das Ermitteln der ersten und zweiten relativen Pose der Bildaufnahmeeinheit das Ermitteln einer Ego-Pose des spurgebundenen Fahrzeugs

- auf Basis von Landkartendaten, welche Informationen über den Verlauf der von dem Fahrzeug befahrenen Spur umfassen, und
- auf Basis von sensorbasierten Daten zur Selbstlokalisation des spurgebundenen Fahrzeugs.

Zur Ermittlung von Rückprojektionsdaten müssen die jeweiligen relativen Posen der Bildaufnahmeeinheit bei der Aufnahme der ersten und zweiten Bilddaten bekannt sein. Die Ermittlung dieser Informationen wird durch die Spurgebundenheit des die Bildaufnahmeeinheit führenden Fahrzeugs sehr erleichtert.

Dabei erfolgt das Ermitteln der ersten und zweiten relativen Pose der Bildaufnahmeeinheit vorzugsweise auf Basis der Annahme einer gleichförmigen Gestalt der Spur. Bei dieser Variante wird die Spur als gerade und damit auch der Lichtraum vor dem Fahrzeug als gleichförmig angenommen. Es muss also insbesondere keine Richtungsänderung der Spur berücksichtigt werden, wodurch die Ermittlung der relativen Posen und der Rückprojektionsdaten vereinfacht wird. "Gleichförmig" soll in diesem Zusammenhang bedeuten, dass der Lichtraum vor dem Schienenfahrzeug "gerade" verläuft und keine Krümmung aufweist.

Die Annahme einer gleichförmigen Gestalt der Spur beruht vorzugsweise auf einer der folgenden Eigenschaften der Spur:

- der Krümmungsradius der Spur ist kleiner als ein vorbestimmter Schwellwert,
- der Gradient des Niveaus der Spur ist kleiner als ein vorbestimmter Schwellwert.

Vorteilhaft können kleine Abweichungen der Spur von einem idealen geradlinigen Verlauf vernachlässigt werden, wenn sie sich nicht auf die Ermittlung eines Rückprojektionsfehlers auswirken. Die erwähnten Schwellwerte können rechnerisch oder durch eine experimentelle Vorgehensweise ermittelt werden.

Wie bereits erwähnt umfasst das spurgebundene Fahrzeug bevorzugt ein Schienenfahrzeug und umfasst die Spur vorzugsweise einen Schienenstrang. Bei Schienenfahrzeugen ist die Gefahr einer Kollision mit einem Hindernis aufgrund der Erdgebundenheit des Schienenstrangs und des Verlaufs von vielen Schienenstrecken in dicht besiedelten Gebieten besonders hoch. Vorteilhaft wird durch das erfindungsgemäße Verfahren ein solches Hindernis erkannt und damit die Gefahr einer Kollision eines Schienenfahrzeugs mit einem solchen Hindernis stark reduziert.

Die bei dem erfindungsgemäßen Verfahren bevorzugt genutzte Bildaufnahmeeinheit umfasst vorzugsweise eine monokulare Bildaufnahmeeinheit. Eine solche monokulare Bildaufnahmeeinheit ist im Vergleich zu einer Stereobildaufnahmeeinheit besonders ressourcensparend herzustellen und mithin auch kostengünstig.

Bevorzugt erfolgt bei dem Schritt der Ermittlung der Rückprojektionsdaten bei dem erfindungsgemäßen Verfahren eine Rückprojektionstransformation und es werden für die Ermittlung der Rückprojektionstransformation Referenz-3D-Daten bzw. diesen zugeordnete 3D-Punkte bzw. Referenz-3D-Punkte $P^W$ (das W steht für "Weltkoordinaten", das P steht für "Punkte") von einem jeweiligen, in einem Sichtfeld der Bildaufnahmeeinheit liegenden Lichtraum des spurgebundenen Fahrzeugs in Fahrtrichtung des spurgebundenen Fahrzeugs für die beiden ermittelten relativen Posen auf Basis einer Referenz-3D-Karte, vorzugsweise eine Tiefenkarte, von einem Lichtraum des spurgebundenen Fahrzeugs in Fahrtrichtung des spurgebundenen Fahrzeugs und auf Basis der jeweiligen relativen Posen der Bildaufnahmeeinheit ermittelt. Die 3D-Daten können auch bevorzugt auf Basis eines bekannten Verlaufs der befahrenen Spur in Fahrtrichtung des spurgebundenen Fahrzeugs ermittelt werden.

Weiterhin werden Koordinaten $C_j^W$, $C_k^W$ der ersten und zweiten relativen Posen der Bildaufnahmeeinheit in einem Koordinatensystem der 3D-Daten ermittelt.

Zudem wird eine Transformationsvorschrift $jT^k$ zur Transformation von Bilddaten, welche aus der Perspektive der ersten relativen Pose erfasst wurden, in aus der Perspektive der zweiten relativen Pose erfasste Bilddaten bzw. gegebenenfalls virtuelle Bilddaten auf Basis der ermittelten Koordinaten $C_j^W$, $C_k^W$ der Bildaufnahmeeinheit in einem Koordinatensystem der Referenz-3D-Daten $P^W$ ermittelt.

Die Referenz-3D-Karte, vorzugsweise eine Tiefenkarte, gibt Informationen hinsichtlich der zu erwartenden 3D-Daten, welche den aus den jeweiligen Posen erfassten Raumbereich wiedergeben würden. Die Referenz-3D-Karte lässt sich zum Beispiel auf Basis einer hochpräzisen Landkarte, welche den Verlauf der von dem spurgebundenen Fahrzeug befahrenen Spur exakt wiedergibt, sowie der Kenntnis des Profils bzw. Querschnitts der Spur bzw. der die Spur bildenden Fahrbahn oder des die Spur bildenden Schienenstrangs ermitteln. Diese zu erwartenden 3D-Daten lassen sich hindernisfrei durch die Kenntnis der Perspektive und Position der Bildaufnahmeeinheit relativ zu der befahrenen Spur sowie aus der Kenntnis des Verlaufs der befahrenen Spur ermitteln. Insbesondere lässt sich kartenbasiert ermitteln, an welchen Stellen in den 3D-Daten die Spur verläuft. Auf Basis der ermittelten Referenz-3D-Karte lässt sich weiterhin ermitteln, an welcher Position in den zweiten Bilddaten sich ein Bildpunkt aus den ersten Bilddaten, welcher die befahrene Spur abbildet, befinden muss. Dieser Vorgang wird durch die Transformationsvorschrift beschrieben.

Es wird also für die beiden unterschiedlichen Posen der Bildaufnahmeeinheit eine gemeinsame Tiefenkarte verwendet, welche anschaulich gesprochen in der Welt "aufgehängt" ist. Die Transformation bzw. die Pose der Bildaufnahme zur Karte zum ersten Zeitpunkt j und zum zweiten Zweipunkt k ist bekannt. Dadurch können alle 3D-Punkte über diese Pose in das Bild vom ersten Zeitpunkt j auf den zweiten Zeitpunkt k projiziert werden (sofern sichtbar im Blickfeld der Bildaufnahmeeinheit). Die entsprechenden Helligkeits-/Farbwerte werden dann verglichen.

Für die Ermittlung der Transformationsvorschrift soll folgende Vorgehensweise skizziert werden:
Die 3D-Daten bzw. Referenz-3D-Daten bzw. deren 3D-Punkte $P^w$ im Sichtfeld der beiden Kameraposen $C_j^W$ und $C_k^W$ sind gegeben, entweder direkt über eine Karte oder sie werden zum jeweiligen Zeitpunkt aus den Karteninformationen über den Verlauf der Strecke berechnet. Die Lokalisierung, d. h. die Kenntnis der Kameraposen liefert die Positionen und Orientierungen der Kameras $C_j^W$ und $C_k^W$ in Bezug auf das Koordinatensystem der 3D-Punkte $P^w$. C ist eine Transformationsmatrix bestehend aus der Rotation R und Translation t

$$\text{mit } C = \begin{bmatrix} R & t \\ 0\ 0\ 0 & 1 \end{bmatrix}, \text{ mit } R = \begin{bmatrix} r_{x0} & r_{y0} & r_{z0} \\ r_{x1} & r_{y1} & r_{z1} \\ r_{x2} & r_{y2} & r_{z2} \end{bmatrix} \text{ sowie } t = \begin{bmatrix} t_x \\ t_y \\ t_z \end{bmatrix}.$$

Hierüber kann als Transformationsvorschrift eine Transformationsmatrix $jT^k = (C_k{}^W)^{-1}C_j{}^W$ errechnet werden.

Mit Hilfe der intrinsischen Kameraparameter und einer sogenannten Kameramatrix M

$$M = \begin{bmatrix} f & 0 & c_x \\ 0 & f & c_y \\ 0 & 0 & 1 \end{bmatrix}$$

(f ist die Brennweite, cx ist das optische Zentrum in x-Richtung, cy ist das optische Zentrum in y-Richtung) kann die Bildkoordinate $u_{Pj}$ eines Punkts $P_j{}^w$ im ersten Kamerabild bzw. insbesondere den ersten Intensitätsdaten $I_j$ errechnet werden: $u_{Pj} = M (C_j{}^W)^{-1} P_j{}^w$. Die Position $u_{Pk}$ von $P_j{}^w$ im zweiten Kamerabild bzw. insbesondere den zweiten Insitätsdaten $I_k$ wird errechnet über $u_{Pk} = M\ {}^kT^j (C_k{}^W)^{-1} P_j{}^w$. Im Idealfall, also wenn kein Hindernis vorhanden ist, sind die Inhalte der Bilder an den Bildkoordinaten $u_{Pk}$ und $u_{Pj}$ identisch: $I_j(u_{Pj}) = I_k(u_{Pk})$.

Besonders bevorzugt werden somit die Rückprojektionsdaten durch Anwenden der Transformationsvorschrift, vorzugsweise die erwähnte Transformationsmatrix $^jT^k$, auf die ersten Bilddaten und/oder die zweiten Bilddaten generiert. Vorteilhaft lassen sich beispielsweise auf Basis der ersten Bilddaten virtuelle zweite Bilddaten erzeugen, welche nur dann von den tatsächlich erfassten zweiten Bilddaten abweichen, wenn sich ein Hindernis im Lichtraum befindet, der die befahrene Spur quasi verdeckt und damit einen Rückprojektionsfehler provoziert. Umgekehrt lassen sich auch auf Basis der zweiten Bilddaten virtuelle erste Bilddaten erzeugen, welche nur dann von den tatsächlich erfassten ersten Bilddaten abweichen, wenn sich ein Hindernis im Lichtraum befindet, der die befahrene Spur quasi verdeckt und damit einen Rückprojektionsfehler provoziert.

Die Transformationsmatrix $^jT^k$ ist nicht abhängig von den Tiefeninformationen oder 3D-Punkten aus einer Karte. Die Transformationsmatrix $^jT^k$ ergibt sich aus der bekannten Bewegung des Fahrzeugs von der ersten Position zum Zeitpunkt j zur zweiten Position zum Zeitpunkt k. Diese Bewegung wird durch einen Lokalisierungsansatz ermittelt.

Die für die Rückprojektion notwendige 3D-Information kann zu jedem Zeitpunkt (beispielsweise j und k) ermittelt werden: Der Streckenverlauf vor dem Schienenfahrzeug ist bekannt durch Lokalisierung und Karte, und daraufhin können 3D-Punkte oder ein Tiefenbild aus der Perspektive von j oder k errechnet werden. In diesem Fall ist in einer Karte bzw. Landkarte nur der Gleisverlauf also beispielsweise in Form einer Linie oder eines Polygons dargestellt oder es gibt eine detaillierte Referenz-3D-Karte basierend auf 3D-Punkten (z.B. durch einen Laserscan erzeugt).

Ganz besonders bevorzugt werden die Rückprojektionsdaten in Abhängigkeit von exakt ermittelten intrinsischen und extrinsischen Kalibrationsdaten bzw. Parametern der Bildaufnahmeeinheit ermittelt. Unter intrinsischen Parametern einer Bildaufnahmeeinheit werden Parameter verstanden, welche die Bildgeometrie der erfassten Bilddaten beeinflussen. Diese umfassen die Brennweite, die Position des optischen Zentrums, die optische Breite, die optische Höhe und die Verzeichnungsparameter. Die extrinsischen Parameter umfassen die Pose der Bildaufnahmeeinheit. Vorteilhaft ermöglichen die ermittelten intrinsischen und extrinsischen Kalibrationsdaten eine exakte Ermittlung der relativen Posen der Bildaufnahmeeinheit sowie eine geometrische Vergleichbarkeit und Zuordenbarkeit der Bildpunkte der jeweils erfassten ersten und zweiten Bilddaten.

Ebenfalls besonders bevorzugt erfolgt das Ermitteln des Rückprojektionsfehlers durch eine der folgenden Vorgehensweisen:

- Vergleichen von durch die Transformationsvorschrift einander zugewiesenen Bildintensitätsdaten der ersten Bilddaten und der zweiten Bilddaten,
- Transformieren von durch die Transformationsvorschrift einander zugewiesenen Farbwerten der ersten Bilddaten und der zweiten Bilddaten.

Vorteilhaft wird bei dieser Vorgehensweise der Umstand genutzt, dass unterschiedliche Oberflächenpunkte eines Hindernisses oder Oberflächenpunkte des Hindernisses und dessen Umgebung in der Regel auch mit unterschiedlichen Intensitätswerten oder Farbwerten abgebildet werden, wodurch ein Rückprojektionsfehler erzeugt wird.

Ebenfalls bevorzugt wird das Ermittlungsergebnis, ob ein Hindernis aufgetreten ist, durch einen Filterprozess validiert. Dabei werden mehr als zwei Sätze von aufeinanderfolgend aufgenommenen Bilddaten beobachtet. Ein solcher Filterprozess ermöglicht einen Vergleich eines ermittelten Hindernisses auf Konformität mit den vorher und nachher erfassten Daten, wodurch das Ermittlungsergebnis bzw. die Erkennung eines Hindernisses validiert werden kann. Beispielsweise können durch einen Tiefpassfilter hochfrequent auftretende Störeffekte, welche zum Beispiel durch die Wiedergabe von periodisch auftretenden Hintergrundmustern, die beispielsweise durch Eisenbahnschwellen erzeugt werden, verursacht werden können, herausgefiltert werden.

Wie bereits kurz erwähnt, wird das Ermittlungsergebnis selbst auch bevorzugt für das Ermitteln einer modellbasierten Konsistenzinformation in einem Verfahren zur Hinderniserkennung mit unterschiedlichen redundanten Methoden verwendet. Vorteilhaft kann mit dem Ermittlungsergebnis selbst auch eine Validierung der Erkennung eines Hindernisses, welche auf Basis eines alternativen Erkennungsverfahrens erfolgt ist, vorgenommen werden.

Die Erfindung wird im Folgenden unter Hinweis auf die beigefügten Figuren anhand von Ausführungsbeispielen noch einmal näher erläutert. Es zeigen:

FIG 1 eine schematische Darstellung eines Szenarios einer Hinderniserkennung im Lichtraum eines Schienenfahrzeugs,

FIG 2 eine schematische Darstellung eines Hindernisses im Lichtraum eines Schienenfahrzeugs und eines daraus resultierenden Rückprojektionsfehlers,

FIG 3 ein Flussdiagramm, welches ein Verfahren zur Hinderniserkennung für ein Schienenfahrzeug gemäß einem Ausführungsbeispiel der Erfindung veranschaulicht,

FIG 4 ein Flussdiagramm, welches den Schritt 3.III des in FIG 3 veranschaulichten Verfahrens veranschaulicht,

FIG 5 eine schematische Darstellung einer Hinderniserkennungseinrichtung gemäß einem Ausführungsbeispiel der Erfindung,

FIG 6 eine schematische Darstellung eines Schienenfahrzeugs gemäß einem Ausführungsbeispiel der Erfindung.

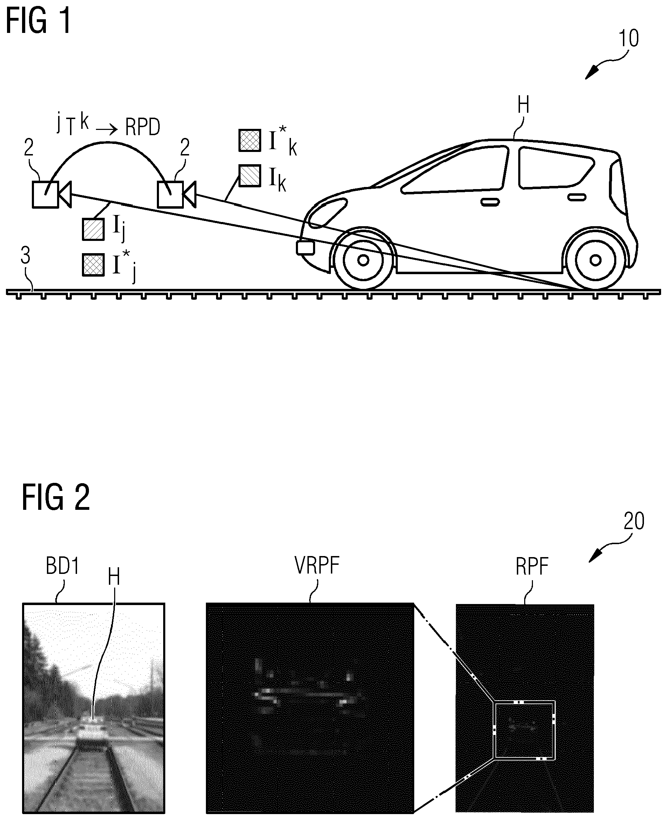

In FIG 1 ist eine schematische Darstellung 10 einer Hinderniserkennung im Lichtraum eines Schienenfahrzeugs gezeigt. Ein Hindernis H, in diesem Fall ein Straßenfahrzeug, steht im Lichtraumprofil eines spurgebundenen Fahrzeugs, in diesem Ausführungsbeispiel ein Schienenfahrzeug (nicht gezeigt), auf einer Spur, in diesem speziellen Ausführungsbeispiel auf einem Schienenstrang 3. Mit einer an dem Schienenfahrzeug angeordneten Bildaufnahmeeinheit 2 werden erste Intensitätsdaten $I_j$ an einer ersten Relativpose und zweite Intensitätsdaten $I_k$ an einer zweiten Relativpose relativ zu dem Schienenstrang 3 erfasst. Weiterhin werden Rückprojektionsdaten RPD der ersten Intensitätsdaten $I_j$ ermittelt. Die Intensitätsdaten $I_j$, $I_k$ sind in FIG 1 mit unterschiedlichen Schraffuren dargestellt, was darauf hinweisen soll, dass sie aufgrund des auftretenden Hindernisses unterschiedliche Intensitätswerte aufweisen. Die Rückprojektionsdaten RPD werden sowohl auf Basis der ersten Intensitätsdaten $I_j$ als auch auf Basis einer vorbekannten Tiefenkarte TK ermittelt, die Auskunft über Tiefendaten im Lichtraum des Schienenfahrzeugs an den beiden Relativposen RP1, RP2 gibt, wenn kein Hindernis H vorhanden ist. Die Rückprojektionsdaten RPD geben Auskunft über die Zuordnung der Intensitätsdaten $I_j$, $I_k$ durch die Rückprojektion zueinander. Durch den Vergleich der durch die Rückprojektionsdaten RPD einander zugeordneten Intensitätsdaten $I_j$, $I_k$ wird ein möglichweise auftretender Rückprojektionsfehler RPF ermittelt, bei dessen Auftreten auf ein Hindernis H geschlossen werden kann. Der Rückprojektionsfehler RPF ist in FIG 1 durch die unterschiedlichen Schraffuren der einander zugeordneten ersten und zweiten Intensitätsdaten $I_j$, $I_k$ veranschaulicht. Tritt kein Hindernis auf, so werden einander zugeordnete hindernisfreie Intensitätsdaten $I^*_j$, $I^*_k$ ermittelt, welche in FIG 1 dieselbe Schraffur haben, was verdeutlichen soll, dass sie dieselben Intensitätswerte an der durch die Rückprojektion ermittelten zugeordneten Bildposition haben. Mithin tritt in diesem Fall kein Rückprojektionsfehler RPF auf. Eine für die Ermittlung der Rückprojektionsdaten RPD genutzte Rückprojektion lässt sich durch eine Transformationsvorschrift bzw. Transformationsmatrix $^jT^k$ mathematisch darstellen.

In FIG 2 ist eine Veranschaulichung 20 eines Hindernisses H im Lichtraum eines Schienenfahrzeugs und des daraus resultierenden Rückprojektionsfehlers RPF gezeigt. In FIG 2 sind drei nebeneinander angeordnete Bildabschnitte dargestellt. In einem links in FIG 2 dargestellten Bildabschnitt sind erste Bilddaten BD1 einer Bildaufnahme einer monokularen Bildaufnahmeeinheit 2 gezeigt. In den ersten Bilddaten BD1 ist ein Hindernis H, in diesem Fall ein Straßenfahrzeug, zu erkennen. In einem mittleren Bildabschnitt sind in FIG 2 vergrößert dargestellte Rückprojektionsfehlerdaten VRPF dargestellt. In einem rechten Bildabschnitt in FIG 2 ist der Rückprojektionsfehler RPF in Originalgröße gezeigt. Da die Strukturen des Hecks des Straßenfahrzeugs unterschiedliche Bildintensitäten und insbesondere zum Hintergrund unterschiedliche Bildintensitäten zeigen, sind die Strukturen und der Umriss des Hecks des Straßenfahrzeugs auf der Darstellung des Rückprojektionsfehlers RPF zu erkennen.

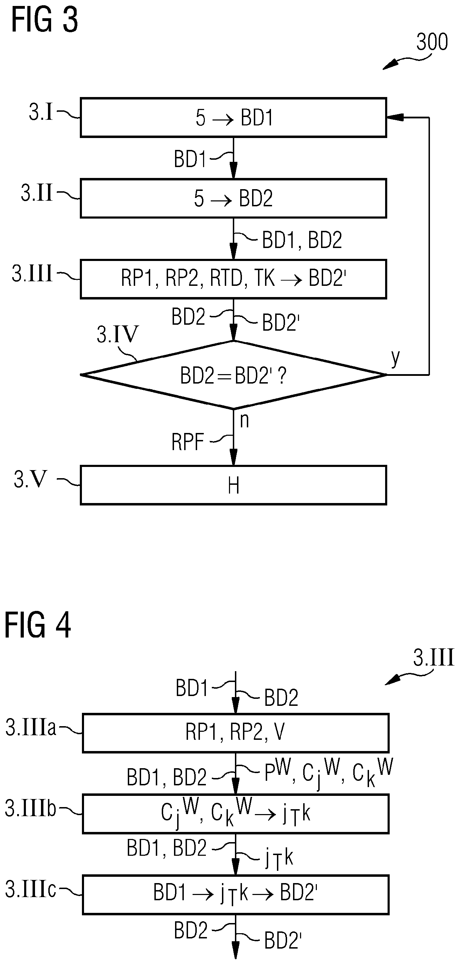

In FIG 3 ist ein Flussdiagramm 300 gezeigt, welches ein Verfahren zur Hinderniserkennung für ein Schienenfahrzeug gemäß einem Ausführungsbeispiel der Erfindung veranschaulicht.

Im Rahmen des in FIG 3 veranschaulichten Überwachungsprozesses, werden bei dem Schritt 3.I zunächst zu einem ersten Zeitpunkt erste Bilddaten BD1 von einem Lichtraum 5 des Schienenfahrzeugs 1 mit einer an dem Schienenfahrzeug 1 angeordneten Bildaufnahmeeinheit 2 mit einer ersten relativen Pose RP1 zu einem von dem Schienenfahrzeug 1 befahrenen Schienenstrang 3 erfasst. Als relative Pose soll eine Relativposition der Bildaufnahmeeinheit 2 zu dem befahrenen Schienenstrang 3 sowie die relative Orientierung der Bildaufnahmeeinheit 2 zu dem Schienenstrang 3 verstanden werden.

Bei dem Schritt 3.II werden, nachdem sich das Schienenfahrzeug 1 weiterbewegt hat, zweite Bilddaten BD2 mit der Bildaufnahmeeinheit 2 mit einer sich von der ersten relativen Pose RP1 unterscheidenden zweiten relativen Pose RP2 zu dem von dem Schienenfahrzeug 1 befahrenen Schienenstrang 3 erfasst.

Bei dem Schritt 3.III werden durch eine Rückprojektion virtuelle zweite Bilddaten BD2' erzeugt. Diese virtuellen zweiten Bilddaten BD2' basieren auf einer Rückprojektion der ersten Bilddaten BD1 in Richtung der zweiten relativen Pose RP2 der Bildaufnahmeeinheit 2. Die Rückprojektion erfolgt auf Basis der Kenntnis sogenannter Referenztiefendaten RTD, die insbesondere eine beispielsweise aus einer Datenbank bezogene Tiefenkarte TK umfassen, welche Referenz-3D-Daten von dem von der Bildaufnahmeeinheit 2 erfassten Raumbereich bzw. Lichtraum vor dem Schienenfahrzeug 1 aufweisen, sowie auf Basis der Kenntnis der ersten und zweiten relativen Pose RP1, RP2. Eine ausführliche Beschreibung des Schritts 3.III erfolgt im Zusammenhang mit FIG 4.

Bei dem Schritt 3.IV erfolgt eine Ermittlung eines möglichen Rückprojektionsfehlers RPF durch einen Vergleich der zweiten Bilddaten BD2 mit den virtuellen zweiten Bilddaten BD2'. Für den Fall, dass bei dem Schritt 3.IV ein Rückprojektionsfehler RPF ermittelt wird, was in FIG 3 mit "n" gekennzeichnet ist, wird zu dem Schritt 3.V übergegangen, bei dem ermittelt wird, dass ein Hindernis H in dem Lichtraum 5 auftritt. Für den Fall, dass bei dem Schritt 3.IV kein Rückprojektionsfehler RPF ermittelt wird, was in FIG 3 mit "y" gekennzeichnet ist, wird zu dem Schritt 3.I zurückgekehrt und der Überwachungsprozess wird fortgesetzt.

In FIG 4 ist ein Flussdiagramm gezeigt, welches den bereits in FIG 3 veranschaulichten Schritt 3.III im Detail zeigt. Bei dem Schritt 3.IIIa wird zunächst die erste relative Pose RP1 der Bildaufnahmeeinheit 2 des Schienenfahrzeugs 1 bezogen auf den von dem Schienenfahrzeug 1 befahrenen Schienenstrang 3 für eine erste geographische Position des Schienenfahrzeugs 1 ermittelt, an der die Bildaufnahmeeinheit 2 die ersten Bilddaten BD1 aufgenommen hat. Die erste relative Pose RP1 wird auf Basis von Landkartendaten, welche Informationen über den Verlauf V des von dem Schienenfahrzeug 1 befahrenen Schienenstrangs 3 umfassen, sowie auf Basis von Navigationsdaten zur Selbstlokalisation des Schienenfahrzeugs 1 ermittelt. Weiterhin wird auch eine zweite relative Pose RP2 der Bildaufnahmeeinheit 2 des Schienenfahrzeugs bezogen auf den von dem Schienenfahrzeug 1 befahrenen Schienenstrang für eine zweite geographische Position des Schienenfahrzeugs 1 ermittelt, an der die Bildaufnahmeeinheit 2 die zweiten Bilddaten BD2 aufgenommen hat. Die zweite relative Pose RP2 wird auf Basis von Landkartendaten, welche Informationen über den Verlauf V des von dem Schienenfahrzeug 1 befahrenen Schienenstrangs 3 umfassen, sowie auf Basis von Navigationsdaten zur Selbstlokalisation des Schienenfahrzeugs 1 ermittelt. Weiterhin wird bei dem Schritt 3.IIIa eine Tiefenkarte TK dazu genutzt, um 3D-Daten $P^W$ in einem jeweiligen, durch ein Sichtfeld der Bildaufnahmeeinheit 2 erfassten Lichtraum 5 des Schienenfahrzeugs 1 in Fahrtrichtung des Schienenfahrzeugs 1 für die beiden ermittelten relativen Posen RP1, RP2 auf Basis der jeweiligen relativen Posen RP1, EP2 der Bildaufnahmeeinheit 2 und des bekannten Verlaufs V des befahrenen Schienenstrangs 3 zu ermitteln, und es werden Koordinaten $C_j^W$, $C_k^W$ der ersten und zweiten relativen Posen RP1, RP2 der Bildaufnahmeeinheit 2 in einem Koordinatensystem der 3D-Daten $P^W$ ermittelt.

Bei dem Schritt 3.IIIb wird auf Basis der bei dem Schritt 3.IIIa ermittelten Koordinaten $C_j^W$, $C_k^W$ der ersten und zweiten relativen Posen RP1, RP2 der Bildaufnahmeeinheit 2 in einem Koordinatensystem der 3D-Daten $P^W$ eine Rückprojektionstransformationsvorschrift $^jT^k$ ermittelt. Die Rückprojektionstransformationsvorschrift $^jT^k$ weist Bildpunkte der ersten und zweiten Bilddaten BD1, BD2 einander zu.

Bei dem Schritt 3.IIIc erfolgt eine Rückprojektion der ersten Bilddaten BD1 durch Anwendung der Rückprojektionstransformationsvorschrift $^jT^k$ auf die ersten Bilddaten BD1, wobei virtuelle zweite Bilddaten BD2' gewonnen werden.

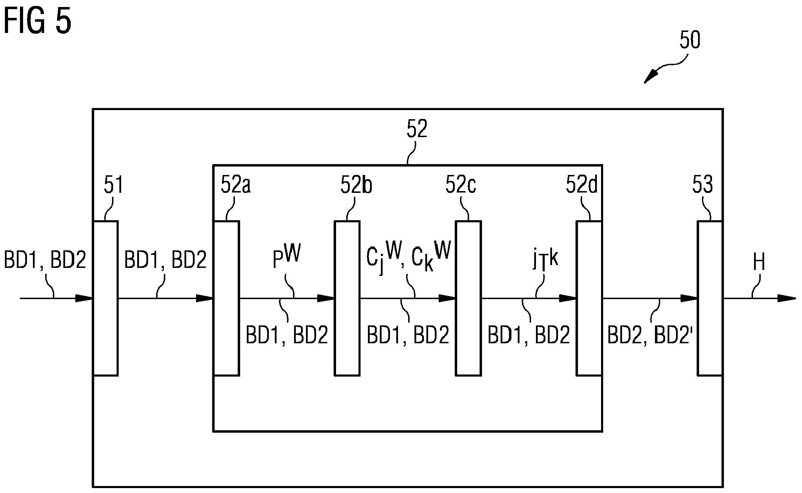

In FIG 5 ist eine schematische Darstellung einer Hinderniserkennungseinrichtung 50 gemäß einem Ausführungsbeispiel der Erfindung gezeigt.

Die Hinderniserkennungseinrichtung 50 umfasst eine links in FIG 5 dargestellte Eingangsschnittstelle 51. Die Eingangsschnittstelle 51 ist dazu eingerichtet, erste Bilddaten BD1, welche mit einer an einem Schienenfahrzeug 1 angeordneten Bildaufnahmeeinheit 2 mit einer ersten relativen Pose RP1 zu einem von dem Schienenfahrzeug 1 befahrenen Schienenstrang 3 von einem Lichtraum 5 des Schienenfahrzeugs 1 aufgenommen wurden, zu erfassen, und zweite Bilddaten BD2, welche mit der an dem Schienenfahrzeug 1 angeordneten Bildaufnahmeeinheit 2 mit einer zweiten relativen Pose RP2 zu dem von dem Schienenfahrzeug 1 befahrenen Schienenstrang 3 von dem Lichtraum 5 des Schienenfahrzeugs 1 aufgenommen wurden, zu erfassen.

Die Hinderniserkennungseinrichtung 50 weist auch eine Rückprojektionseinheit 52 zum Ermitteln von Rückprojektionsdaten auf Basis der erfassten Bilddaten BD1, BD2 und auf Basis vorbekannter Referenztiefendaten, beispielsweise in Form einer Tiefenkarte TK, auf.

Im Detail umfasst die Rückprojektionseinheit 52 eine 3D-Daten-Ermittlungseinheit 52a, mit der Referenz-3D-Daten $P^W$ in einem jeweiligen, durch ein Sichtfeld der Bildaufnahmeeinheit 2 erfassten Lichtraum 5 des Schienenfahrzeugs 1 in Fahrtrichtung des Schienenfahrzeugs 1 für die beiden ermittelten relativen Posen RP1, RP2 auf Basis einer Tiefenkarte TK und der Kenntnis der jeweiligen relativen Posen RP1, RP2 der Bildaufnahmeeinheit 2 und des bekannten Verlaufs V des befahrenen Schienenstrangs 3 ermittelt werden.

Die jeweiligen relativen Posen RP1, RP2 werden auf Basis von Landkartendaten, welche Informationen über den Verlauf V des von dem Schienenfahrzeug 1 befahrenen Schienenstrangs 3 umfassen, sowie auf Basis von Navigationsdaten zur Selbstlokalisation des Schienenfahrzeugs 1 ermittelt.

Teil der Rückprojektionseinheit 52 ist auch eine Koordinaten-Ermittlungseinheit 52b, mit der auf Basis der ermittelten Referenz-3D-Daten $P^W$ sowie der Kenntnis der relativen Posen RP1, RP2 der Bildaufnahmeeinheit 2 Koordinaten $C_j^W$, $C_k^W$ der ersten und zweiten relativen Posen RP1, RP2 der Bildaufnahmeeinheit 2 in einem Koordinatensystem der Referenz-3D-Daten $P^W$ ermittelt werden.

Überdies umfasst die Rückprojektionseinheit 52 auch eine Rückprojektionsermittlungseinheit 52c, mit der auf Basis der von der Koordinaten-Ermittlungseinheit 52b in dem Koordinatensystem der Referenz-3D-Daten $P^W$ ermittelten 3D-Koordinaten $C_j^W$, $C_k^W$ der ersten und zweiten relativen Posen RP1, RP2 der Bildaufnahmeeinheit 2 eine Rückprojektionstransformationsvorschrift $^jT^k$ ermittelt wird.

Die Rückprojektionseinheit 52 umfasst schließlich eine Transformationseinheit 52d, mit der eine Rückprojektion der ersten Bilddaten BD1 durch Anwendung der Rückprojektionstransformationsvorschrift $^jT^k$ auf die ersten Bilddaten BD1 erfolgt, wobei virtuelle zweite Bilddaten BD2' erzeugt werden.

Die Hinderniserkennungseinrichtung weist auch eine Detektionseinheit 53 auf, zum Ermitteln, ob ein Hindernis H in dem Lichtraum 5 auftritt, in Abhängigkeit von einem auf Basis der virtuellen zweiten Bilddaten BD2' und der zweiten Bilddaten BD2 ermittelten Rückprojektionsfehler RPF.

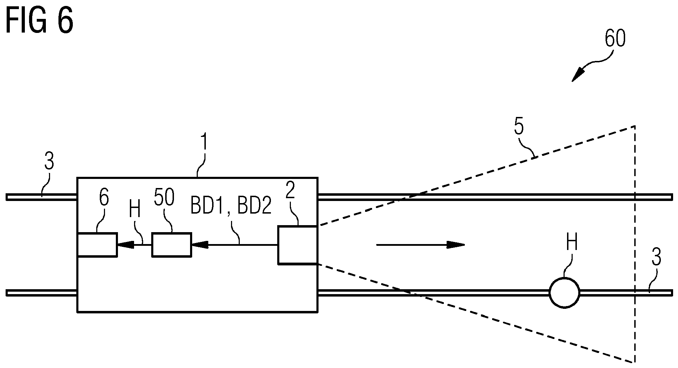

In FIG 6 ist eine schematische Darstellung 60 eines Schienenfahrzeugs 1 gemäß einem Ausführungsbeispiel der Erfindung veranschaulicht. Das links in FIG 6 schematisch dargestellte Schienenfahrzeug 1 fährt von links nach rechts in Pfeilrichtung auf einem Schienenstrang 3 und erfasst mit einer Bildaufnahmeeinheit 2 erste und zweite Bilddaten BD1, BD2 von einem vor dem Schienenfahrzeug 1 liegenden Lichtraum 5. Die Bilddaten BD1, BD2 werden an eine Hinderniserkennungseinrichtung 50 übermittelt, die ebenfalls Teil des Schienenfahrzeugs 1 ist und den in FIG 5 veranschaulichten Aufbau hat. Die Hinderniserkennungseinrichtung 50 ermittelt nun auf Basis der Bilddaten BD1, BD2, dass sich in dem Lichtraum 5, genauer gesagt auf der rechten Schiene des in FIG 6 gezeigten Schienenstrangs 3, ein Kollisionshindernis H befindet. Die Information über das Auftreten des Hindernisses H wird an eine von dem Schienenfahrzeug 1 umfasste Steuereinrichtung 6 übermittelt, welche in Antwort auf dieses Kollisionshindernis H Steuerbefehle an einzelne Funktionseinheiten (nicht gezeigt) des Schienenfahrzeugs 1 übermittelt. Beispielsweise werden die Bremsen des Schienenfahrzeugs 1 angesteuert, um das Schienenfahrzeug 1 vor dem Kollisionshindernis H zum Stehen zu bringen.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können. Unabhängig vom grammatikalischen Geschlecht eines bestimmten Begriffes sind Personen mit männlicher, weiblicher oder anderer Geschlechteridentität mit umfasst.

## Patentansprüche

1. Verfahren zur Hinderniserkennung für ein spurgebundenes Fahrzeug (1), aufweisend die Schritte:

   - Erfassen von ersten Bilddaten (BD1) von einem Lichtraum (5) des spurgebundenen Fahrzeugs (1) mit einer an dem spurgebundenen Fahrzeug (1) angeordneten Bildaufnahmeeinheit (2) mit einer ersten relativen Pose (RP1) der Bildaufnahmeeinheit (2) relativ zu einer von dem spurgebundenen Fahrzeug (1) befahrenen Spur (3),
   - Erfassen von zweiten Bilddaten (BD2) mit der Bildaufnahmeeinheit (2) mit einer sich von der ersten relativen Pose (RP1) unterscheidenden zweiten relativen Pose (RP2) der Bildaufnahmeeinheit (2) relativ zu der von dem spurgebundenen Fahrzeug (1) befahrenen Spur (3),
   - Ermitteln von Rückprojektionsdaten (RPD), welche Bildpunkte der ersten Bilddaten (BD1) und der zweiten Bilddaten (BD2) über eine Rückprojektion einander zuordnen, auf Basis vorbekannter Referenz-3D-Daten ($P^W$) von dem bildlich erfassten Lichtraum (5) und der ersten und zweiten relativen Posen (RP1, RP2) der Bildaufnahmeeinheit (2),
   - Ermitteln, ob ein Hindernis (H) in dem Lichtraum (5) auftritt, in Abhängigkeit von einem Rückprojektionsfehler (RPF), welcher auf Basis eines Vergleichs zwischen den über die Rückprojektion einander zugeordneten Bildpunkten der ersten Bilddaten (BD1) und der zweiten Bilddaten (BD2) ermittelt wird.

2. Verfahren nach Anspruch 1, wobei

   - die erste relative Pose (RP1) der an dem spurgebundenen Fahrzeug (1) angeordneten Bildaufnahmeeinheit (2) bezogen auf die von dem spurgebundenen Fahrzeug (1) befahrene Spur (3) an einer ersten geographischen Position des spurgebundenen Fahrzeugs (1) ermittelt wird und
   - die zweite relative Pose (RP2) der Bildaufnahmeeinheit (2) bezogen auf die von dem spurgebundenen Fahrzeug (1) befahrene Spur (3) an einer zu der ersten geographischen Position unterschiedlichen zweiten geographischen Position des spurgebundenen Fahrzeugs (1) ermittelt wird.

3. Verfahren nach Anspruch 2, wobei das Ermitteln der ersten und zweiten relativen Pose (RP1, RP2) der Bildaufnahmeeinheit (2) das Ermitteln einer Ego-Pose des spurgebundenen Fahrzeugs (1)

   - auf Basis von Landkartendaten, welche Informationen über den Verlauf (V) der von dem Fahrzeug (1) befahrenen Spur (3) umfassen, und
   - auf Basis von sensorbasierten Daten zur Selbstlokalisation des spurgebundenen Fahrzeugs (1)

   umfasst.

4. Verfahren nach Anspruch 2 oder 3, wobei das Ermitteln der ersten und zweiten relativen Pose (RP1, RP2) der Bildaufnahmeeinheit (2) auf Basis der Annahme einer gleichförmigen Gestalt der Spur (3) erfolgt.

5. Verfahren nach Anspruch 4, wobei die Annahme einer gleichförmigen Gestalt der Spur auf einer der folgenden Eigenschaften der Spur (3) beruht:

   - der Krümmungsradius der Spur (3) ist kleiner als ein vorbestimmter Schwellwert,
   - der Gradient des Niveaus der Spur (3) ist kleiner als ein vorbestimmter Schwellwert.

6. Verfahren nach einem der vorstehenden Ansprüche, wobei das spurgebundene Fahrzeug (1) ein Schienenfahrzeug umfasst und die Spur (3) einen Schienenstrang umfasst.

7. Verfahren nach einem der vorstehenden Ansprüche, wobei die Bildaufnahmeeinheit (2) eine monokulare Bildaufnahmeeinheit umfasst.

8. Verfahren nach einem der vorstehenden Ansprüche, wobei für eine Ermittlung der Rückprojektionsdaten (RPD)

   - Referenz-3D-Daten ($P^W$) von einem jeweiligen in einem Sichtfeld der Bildaufnahmeeinheit (2) liegenden Lichtraum (5) des spurgebundenen Fahrzeugs (1) in Fahrtrichtung (R) des spurgebundenen Fahrzeugs (1) für die beiden ermittelten relativen Posen (RP1, RP2) auf Basis

     - einer Referenz-3D-Karte (TK) von einem Lichtraum (5) des spurgebundenen Fahrzeugs (1) in Fahrtrichtung (R) des spurgebundenen Fahrzeugs (1) und
     - der jeweiligen relativen Posen (RP1, EP2) der Bildaufnahmeeinheit (2)

   ermittelt werden,
   - Koordinaten ($C_j^W$, $C_k^W$) der ersten und zweiten relativen Posen (RP1, RP2) der Bildaufnahmeeinheit (2) in einem Koordinatensystem der Referenz-3D-Daten ($P^W$) ermittelt werden und
   - eine Transformationsvorschrift ($^jT^k$) zur Transformation von Bilddaten (BD1), welche aus der Perspektive der ersten relativen Pose (RP1) erfasst wurden, in aus der Perspektive der zweiten relativen Pose (RP2) erfasste Bilddaten (BD2) auf Basis der ermittelten Koordinaten ($C_j^W$, $C_k^W$) der ersten und zweiten relativen Posen (RP1, RP2) der Bildaufnahmeeinheit (2) in einem Koordinatensystem der Referenz-3D-Daten ($P^W$) ermittelt wird.

9. Verfahren nach Anspruch 8, wobei die Rückprojektionsdaten (RPD) durch Anwenden der Transformationsvorschrift ($^jT^k$) auf die ersten Bilddaten (BD1) und/oder die zweiten Bilddaten (BD2) generiert werden.

10. Verfahren nach einem der vorstehenden Ansprüche, wobei die Rückprojektionsdaten (RPD) in Abhängigkeit von exakt ermittelten intrinsischen Kalibrationsdaten und extrinsischen Kalibrationsdaten der Bildaufnahmeeinheit (2) ermittelt werden.

11. Verfahren nach einem der vorstehenden Ansprüche, wobei das Ermitteln des Rückprojektionsfehlers (RPF) durch eine der folgenden Vorgehensweisen erfolgt:

- Vergleichen von durch die Transformationsvorschrift ($^jT^k$) einander zugewiesenen Bildintensitätsdaten ($I_j$, $I_k$) der ersten Bilddaten (BD1) und der zweiten Bilddaten (BD2),
- Vergleichen von durch die Transformationsvorschrift ($^jT^k$) einander zugewiesenen Farbwerten der ersten Bilddaten (BD1) und der zweiten Bilddaten (BD2).

12. Hinderniserkennungseinrichtung (50), aufweisend:

- eine Eingangsschnittstelle (51) zum Empfangen von ersten Bilddaten (BD1), welche von einem Lichtraum (5) eines spurgebundenen Fahrzeugs (1) mit einer an dem spurgebundenen Fahrzeug (1) angeordneten Bildaufnahmeeinheit (2) mit einer ersten relativen Pose (RP1) der Bildaufnahmeeinheit (2) zu einer von dem spurgebundenen Fahrzeug (1) befahrenen Spur (3) erfasst wurden, und zum Empfangen von zweiten Bilddaten (BD2), welche mit der Bildaufnahmeeinheit (2) mit einer sich von der ersten relativen Pose (RP1) unterscheidenden zweiten relativen Pose (RP2) zu der von dem spurgebundenen Fahrzeug (1) befahrenen Spur (3) erfasst wurden,
- eine Rückprojektionseinheit (52) zum Ermitteln von Rückprojektionsdaten (RPD), welche Bildpunkte der ersten Bilddaten (BD1) und der zweiten Bilddaten (BD2) über eine Rückprojektion einander zuordnen, auf Basis vorbekannter Referenz-3D-Daten ($P^W$) von dem bildlich erfassten Lichtraum (5) und der ersten und zweiten relativen Posen (RP1, RP2) der Bildaufnahmeeinheit (2),
- eine Detektionseinheit (53) zum Ermitteln, ob ein Hindernis (H) in dem Lichtraum (5) auftritt, in Abhängigkeit von einem Rückprojektionsfehler (RPF), welcher auf Basis der über die Rückprojektion einander zugeordneten Bildpunkte der ersten Bilddaten (BD1) und der zweiten Bilddaten (BD2) ermittelt wird.

13. Spurgebundenes Fahrzeug (1), vorzugsweise Schienenfahrzeug, aufweisend:

- eine frontseitige Bilddatenaufnahmeeinheit (3) zum Erfassen von Bilddaten (BD1, BD2) von einem Lichtraum (5) des spurgebundenen Fahrzeugs (1),
- eine Hinderniserkennungseinrichtung (50) nach Anspruch 12,
- eine Steuereinrichtung (6) zum Steuern eines Fahrverhaltens des Schienenfahrzeugs (1) in Abhängigkeit davon, ob von der Hinderniserkennungseinrichtung (50) ein Hindernis (H) erkannt wurde.

14. Computerprogrammprodukt mit einem Computerprogramm, welches direkt in eine Speichereinheit eines Rechensystems eines spurgebundenen Fahrzeugs (1) ladbar ist, mit Programmabschnitten, um die Schritte zum Ermitteln von Rückprojektionsdaten (RPD) und zum Ermitteln, ob ein Hindernis (H) in dem Lichtraum (5) auftritt, eines Verfahrens nach, einem der Ansprüche 1 bis 11 auszuführen, wenn das Computerprogramm in dem Rechensystem ausgeführt wird.

15. Computerlesbares Medium, auf welchem von einem Rechensystem ausführbare Programmabschnitte gespeichert sind, um die Schritte zum Ermitteln von Rückprojektionsdaten (RPD) und zum Ermitteln, ob ein Hindernis (H) in dem Lichtraum (5) auftritt, eines Verfahrens nach, einem der Ansprüche 1 bis 11 auszuführen, wenn die Programmabschnitte von dem Rechensystem ausgeführt werden.

FIG 1

FIG 2

## FIG 3

## FIG 4

FIG 5

FIG 6

**EUROPÄISCHER RECHERCHENBERICHT**

Europäisches Patentamt
European Patent Office
Office européen des brevets

**Nummer der Anmeldung**

EP 23 21 4353

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 3 705 371 A1 (TOSHIBA KK [JP]; TOSHIBA INFRASTRUCTURE SYSTEMS & SOLUTIONS CORP [JP]) 9. September 2020 (2020-09-09) | 1-7,10, 12-15 | INV. B61L23/04 |
| A | * Absätze [0006], [0009] - [0044]; Abbildungen 1-7 * | 8,9,11 | ADD. G06T7/20 |
| | ----- | | G06V20/58 |
| Y | EP 3 912 883 A1 (SIEMENS MOBILITY GMBH [DE]) 24. November 2021 (2021-11-24) | 1-7,10, 12-15 | |
| A | * Absätze [0001] - [0003], [0008] - [0010], [0020] - [0023]; Abbildungen 1-2 * | 8,9,11 | |
| | ----- | | |
| Y | DE 10 2021 200408 A1 (SIEMENS MOBILITY GMBH [DE]) 21. Juli 2022 (2022-07-21) | 3 | |
| A | * Absätze [0007], [0011], [0017], [0031] - [0034], [0039]; Abbildungen 1-5 * | 1,2,4-15 | |
| | ----- | | |
| A | DE 10 2021 206475 A1 (SIEMENS MOBILITY GMBH [DE]) 29. Dezember 2022 (2022-12-29) * Absätze [0010], [0016], [0017], [0049]; Abbildungen 1-8 * | 1-15 | |
| | ----- | | |

**RECHERCHIERTE SACHGEBIETE (IPC)**

B61L
G06T
G06V

Der vorliegende Recherchenbericht wurde für alle Patentansprüche erstellt

| Recherchenort | Abschlußdatum der Recherche | Prüfer |
|---|---|---|
| München | 22. Mai 2024 | Massalski, Matthias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 21 4353

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-05-2024

| Im Recherchenbericht angeführtes Patentdokument | Datum der Veröffentlichung | Mitglied(er) der Patentfamilie | Datum der Veröffentlichung |
|---|---|---|---|
| EP 3705371 A1 | 09-09-2020 | CN 111295321 A | 16-06-2020 |
| | | EP 3705371 A1 | 09-09-2020 |
| | | JP 7062407 B2 | 06-05-2022 |
| | | JP 2019084881 A | 06-06-2019 |
| | | WO 2019088267 A1 | 09-05-2019 |
| EP 3912883 A1 | 24-11-2021 | DE 102020206354 A1 | 25-11-2021 |
| | | EP 3912883 A1 | 24-11-2021 |
| DE 102021200408 A1 | 21-07-2022 | DE 102021200408 A1 | 21-07-2022 |
| | | EP 4029758 A1 | 20-07-2022 |
| DE 102021206475 A1 | 29-12-2022 | DE 102021206475 A1 | 29-12-2022 |
| | | EP 4294696 A1 | 27-12-2023 |
| | | WO 2022268375 A1 | 29-12-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BADRLOO ; VARSHOSAZ ; PIRASTEH ; LI.** *Image-Based Obstacle Detection Methods for the Safe Navigation of Unmanned Vehicles: A Review,* 2022

- **RISTIC-DURRANT ; FRANKE ; MICHELS.** *A Review of Vision-Based On-Board Obstacle Detection and Distance Estimation in Railways,* 2021